# EUROPEAN PATENT SPECIFICATION

(11) **EP 2 926 587 B1**
(45) Date of publication and mention of the grant of the patent: **17.06.2020**
(21) Application number: 13805660.1
(22) Date of filing: 22.11.2013
(51) Int. Cl.: H04W 24/10, H04W 88/02

(54) **COOPERATIVE MEASUREMENTS IN WIRELESS NETWORKS**
KOOPERATIVE MESSUNGEN IN DRAHTLOSEN NETZWERKEN
MESURES COOPÉRATIVES DANS DES RÉSEAUX SANS FIL

(30) Priority: 27.11.2012 US 201213686896
(43) Date of publication of application: 07.10.2015
(73) Proprietor: Qualcomm Incorporated, San Diego, CA 92121-1714 (US)
(72) Inventor: SOLIMAN, Samir Salib, San Diego, California 92121-1714 (US)
(74) Representative: Schmidbauer, Andreas Konrad
(86) International application number: PCT/US2013/071458
(87) International publication number: WO 2014/085245

(56) References cited:
- WO-A1-2012/110420
- US-A1- 2010 067 433
- US-A1- 2011 280 141
- US-A1- 2012 231 836

## Description

### BACKGROUND

### Field

The present disclosure relates generally to communication systems, and more particularly, to communications systems with cooperative measurements in UMTS-UTRA and LTE E-UTRA.

### Background

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example of an emerging telecommunication standard is Long Term Evolution (LTE). LTE is a set of enhancements to the Universal Mobile Telecommunications System (UMTS) mobile standard promulgated by Third Generation Partnership Project (3GPP). It is designed to better support mobile broadband Internet access by improving spectral efficiency, lower costs, improve services, make use of new spectrum, and better integrate with other open standards using OFDMA on the downlink (DL), SC-FDMA on the uplink (UL), and multiple-input multiple-output (MIMO) antenna technology. However, as the demand for mobile broadband access continues to increase, there exists a need for further improvements in LTE technology. Preferably, these improvements should be applicable to other multi-access technologies and the telecommunication standards that employ these technologies.

In mobile communication networks, multiple co-located radio technologies and multiple co-located carriers will typically be deployed requiring efficient inter-radio technologies (inter-RAT) and inter-frequency handover mechanisms and radio resource management to retain better quality of service. Inter-RAT handover enables the mobility between E-UTRAN and other technologies such as WCDMA, GSM, and cdma2000. Inter-frequency handover enables mobility between two carriers at different frequencies but operating with the same technology. An inter-RAT or inter-frequency handover allows an operator to achieve one or more of the following objectives: providing good cell coverage, load balancing and maintaining service quality. The handover decisions by the serving cell depend on measurements performed by the wireless device. Four common scenarios where wireless devices are required to perform downlink (DL) measurements:
- Wireless device is served by UMTS cell and is required to perform measurements on UMTS cell,
- Wireless device is served by UMTS cell and is required to perform measurements on LTE cell,
- Wireless device is served by LTE cell and is required to perform measurements on UMTS cell,
- Wireless device is served by LTE cell and is required to perform measurements on LTE cell.

To support inter-RAT and inter-frequency, the wireless device must perform these measurements during measurements gaps as configured by the network. These measurements gaps consume part of the resources assigned to the wireless device, and hence have an impact on the quality of service.

Attention is drawn to document US 2010/067433 A1 which relates to a method for wireless communications by a multi-mode mobile station that supports communications with a plurality of radio access technologies (RATs). The RATs may include at least one short range RAT and at least one long range RAT. The method generally includes establishing a first connection with a first network via a short range RAT supported by the mobile station, taking signal quality measurements for one or more long range RAT supported by the mobile station, and transmitting the signal quality measurements via the first connection. Document US2012/231836 discloses a user equipment with a first radio based on LTE and a second radio based on another radio technology.

Further attention is drawn to document WO 2012/110420 A1 which relates to a method implemented in a user equipment of a communication network for reporting inter-radio access technologies measurements. The communication network comprises a first radio access technology system and a second radio access technology system. The user equipment is connected to a primary serving cell of the first radio access technology system and a secondary serving cell of the second radio access technology system. The method comprises: performing signal strength measurements in the first radio access technology system; performing signal strength measurements in the second radio access technology system; determining, based on the signal strength measurements, whether a criterion for a measurement event relating to the second radio access technology system is fulfilled, and transmitting, for a fulfilled criterion, a corresponding measurement report to the communication network.

Furthermore attention is drawn to document US 2011/280141 1 which relates to geographical areas with incomplete coverage of Time Division Synchronous Code Division Multiple Access (TD-SCDMA) networks, in which it may be beneficial for a multimode User Equipment (UE) to handover to a Global System for Mobile Communications (GSM) network. Before handover, a multimode UE may receive an indication from a serving TD-SCDMA cell to enter a Discontinuous Reception (DRX) mode and perform measurement on a nearby GSM cell. After measurement, the UE receives a grant from the serving TD-SCDMA cell allowing the UE to transmit a measurement report to the serving TD-SCDMA cell. The TD-SCDMA cell may use the measurement report to determine if the multimode UE should handover to the GSM cell.

Finally, attention is drawn to document US 2012/231836 A1 which relates to a method and apparatus for in-device coexistence interference detection. The method comprises equipping a UE with a first radio based on LTE radio technology or LTE-advanced radio technology and a second radio based on another radio technology. The method also comprises activating the first radio and the second radio in the UE. Furthermore, the method comprises determining a presence of in-device coexistence interference from the second radio based on a transport block error rate (TBER) in the LTE radio technology or LTE-advanced radio technology.

### SUMMARY

In accordance with the present invention, a method of wireless communication, as set forth in claim 1, and an apparatus for wireless communication, as set forth in claim 8, is provided. Further embodiments are claimed in the dependent claims. In an aspect of the disclosure, a method, a computer program product, and an apparatus are provided. The apparatus communicates using a first radio based on a first radio technology and configures a second radio based on a second radio technology different from the first radio technology to receive signals transmitted based on a radio technology different from the second radio technology. The apparatus also measures a quality indicator of a signal received at the second radio.

The signal is transmitted based on the radio technology different from the second radio technology. A signal transmitted based on the first radio technology from a serving cell is received at the first radio, while the second radio receives signals transmitted based on the radio technology different from the second radio technology from either a neighboring cell or the same serving cell.

The second radio technology may be a WLAN technology, such as WiFi. The radio technology different from the second radio technology may be the same radio technology associated with the first radio or it may be a third radio technology that is different from both the first and second radio technologies. For example, in the case where the first radio technology is LTE and the second radio technology is WiFi, the second radio may be reconfigured to receive signals transmitted in accordance with LTE based radio technology for inter-frequency measurement purposes, or reconfigured to receive signals transmitted in accordance with UMTS for inter-RAT measurement purposes. In the case where the first radio technology is UMTS and the second radio technology is WiFi, the second radio may be reconfigured to receive signals transmitted in accordance with LTE based radio technology for inter-RAT measurement purposes, or reconfigured to receive signals transmitted in accordance with UMTS for inter-frequency measurement purposes.

Depending on the radio technology used to transmit the received signals, the quality indicator may be one of a reference signal received power (RSRP), a reference signal received quality (RSRQ), a received signal strength indicator (RSSI), a single to interference plus noise ratio (SINR), common pilot channel (CPICH) received signal code power (RSCP), and CPICH Ec/No.

### BRIEF DESCRIPTION OF THE DRAWINGS

FIG. 1 is a diagram illustrating an example of a network architecture.
FIG. 2 is a diagram illustrating an example of an access network.
FIG. 3 is a diagram illustrating an example of a DL frame structure in LTE.
FIG. 4 is a diagram illustrating an example of an UL frame structure in LTE.
FIG. 5 is an illustration of the downlink reference signal structure.
FIG. 6 is a diagram illustrating messages used during the measurement phase of a conventional handover process.
FIG. 7 is a diagram illustrating an implementation of the measurement phase of a handover process that avoids gaps in communication between a UE and its serving cell.
FIG. 8 is a diagram illustrating communication between a first radio and a second radio of a UE.
FIG. 9 is a flow chart of a method of wireless communication.
FIG. 10 is a conceptual data flow diagram illustrating the data flow between different modules/means/components in an exemplary apparatus.
FIG. 11 is a diagram illustrating an example of a hardware implementation for an apparatus employing a processing system.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, modules, components, circuits, steps, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

Accordingly, in one or more exemplary embodiments, the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), and floppy disk where disks usually reproduce data magnetically, while discs reproduce data optically with lasers. Combinations of the above should also be included within the scope of computer-readable media.

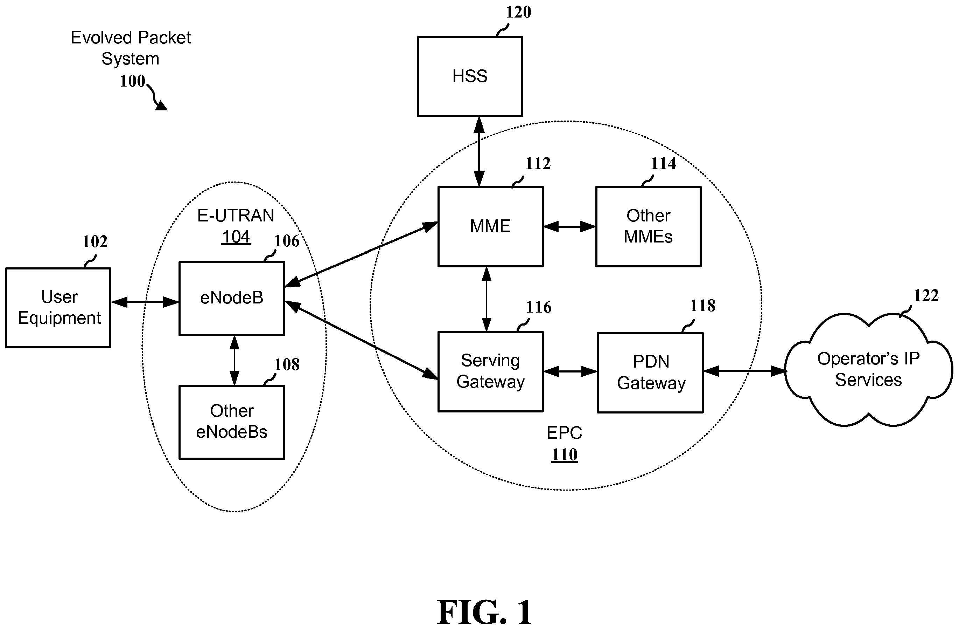

FIG. 1 is a diagram illustrating an LTE network architecture 100. The LTE network architecture 100 may be referred to as an Evolved Packet System (EPS) 100. The EPS 100 may include one or more user equipment (UE) 102, an Evolved UMTS Terrestrial Radio Access Network (E-UTRAN) 104, an Evolved Packet Core (EPC) 110, a Home Subscriber Server (HSS) 120, and an Operator's IP Services 122. The EPS can interconnect with other access networks, but for simplicity those entities/interfaces are not shown. As shown, the EPS provides packet-switched services, however, as those skilled in the art will readily appreciate, the various concepts presented throughout this disclosure may be extended to networks providing circuit-switched services.

The E-UTRAN includes the evolved Node B (eNB) 106 and other eNBs 108. The eNB 106 provides user and control planes protocol terminations toward the UE 102. The eNB 106 may be connected to the other eNBs 108 via a backhaul (e.g., an X2 interface). The eNB 106 may also be referred to as a base station, a base transceiver station, a radio base station, a radio transceiver, a transceiver function, a basic service set (BSS), an extended service set (ESS), or some other suitable terminology. The eNB 106 provides an access point to the EPC 110 for a UE 102. Examples of UEs 102 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, or any other similar functioning device. The UE 102 may also be referred to by those skilled in the art as a mobile station, a subscriber station, a mobile unit, a subscriber unit, a wireless unit, wireless device, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

The eNB 106 is connected by an S1 interface to the EPC 110. The EPC 110 includes a Mobility Management Entity (MME) 112, other MMEs 114, a Serving Gateway 116, and a Packet Data Network (PDN) Gateway 118. The MME 112 is the control node that processes the signaling between the UE 102 and the EPC 110. Generally, the MME 112 provides bearer and connection management. All user IP packets are transferred through the Serving Gateway 116, which itself is connected to the PDN Gateway 118. The PDN Gateway 118 provides UE IP address allocation as well as other functions. The PDN Gateway 118 is connected to the Operator's IP Services 122. The Operator's IP Services 122 may include the Internet, the Intranet, an IP Multimedia Subsystem (IMS), and a PS Streaming Service (PSS).

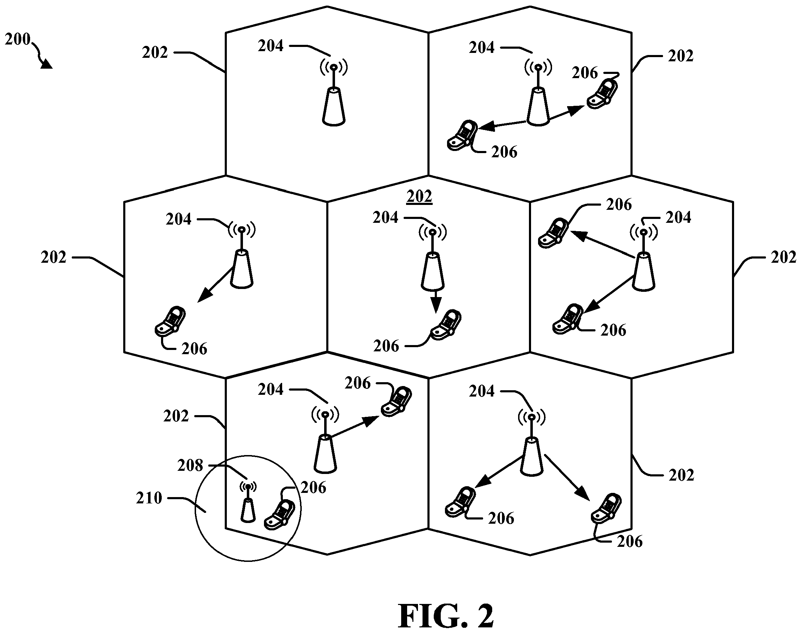

FIG. 2 is a diagram illustrating an example of an access network 200 in an LTE network architecture. In this example, the access network 200 is divided into a number of cellular regions (cells) 202. One or more lower power class eNBs 208 may have cellular regions 210 that overlap with one or more of the cells 202. The lower power class eNB 208 may be a femto cell (e.g., home eNB (HeNB)), pico cell, micro cell, or remote radio head (RRH). The macro eNBs 204 are each assigned to a respective cell 202 and are configured to provide an access point to the EPC 110 for all the UEs 206 in the cells 202. There is no centralized controller in this example of an access network 200, but a centralized controller may be used in alternative configurations. The eNBs 204 are responsible for all radio related functions including radio bearer control, admission control, mobility control, scheduling, security, and connectivity to the serving gateway 116.

The modulation and multiple access scheme employed by the access network 200 may vary depending on the particular telecommunications standard being deployed. In LTE, OFDM is used on the down link (DL) and SC-FDMA is used on the up link (UL) to support both frequency division duplexing (FDD) and time division duplexing (TDD). As those skilled in the art will readily appreciate from the detailed description to follow, the various concepts presented herein are well suited for LTE applications. However, these concepts may be readily extended to other telecommunication standards employing other modulation and multiple access techniques. By way of example, these concepts may be extended to Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. These concepts may also be extended to Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), IEEE 802.11 (Wi-Fi), IEEE 802.16 (WiMAX), IEEE 802.20, and Flash-OFDM employing OFDMA. UTRA, E-UTRA, UMTS, LTE and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

The eNBs 204 may have multiple antennas supporting MIMO technology. The use of MIMO technology enables the eNBs 204 to exploit the spatial domain to support spatial multiplexing, beamforming, and transmit diversity. Spatial multiplexing may be used to transmit different streams of data simultaneously on the same frequency. The data steams may be transmitted to a single UE 206 to increase the data rate or to multiple UEs 206 to increase the overall system capacity. This is achieved by spatially precoding each data stream (i.e., applying a scaling of an amplitude and a phase) and then transmitting each spatially precoded stream through multiple transmit antennas on the DL. The spatially precoded data streams arrive at the UE(s) 206 with different spatial signatures, which enables each of the UE(s) 206 to recover the one or more data streams destined for that UE 206. On the UL, each UE 206 transmits a spatially precoded data stream, which enables the eNB 204 to identify the source of each spatially precoded data stream.

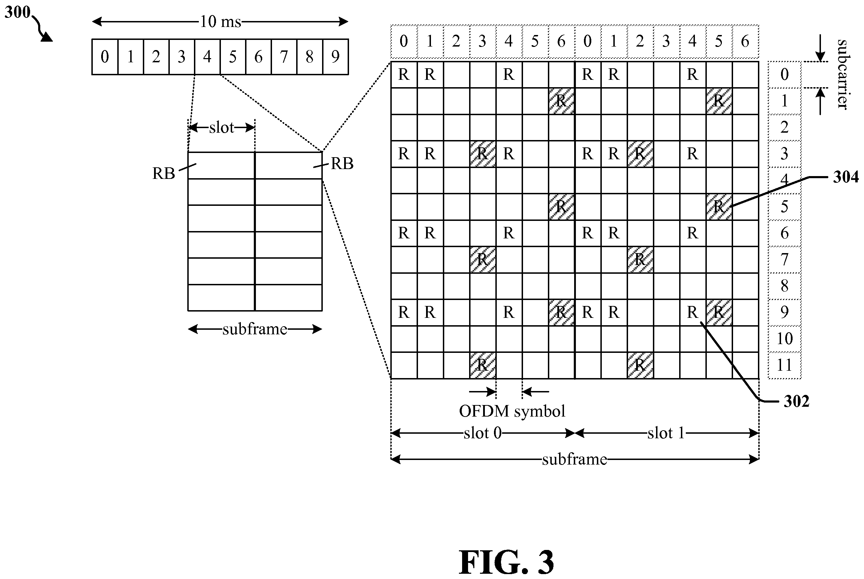

FIG. 3 is a diagram 300 illustrating an example of a DL frame structure in LTE. A frame (10 ms) may be divided into 10 equally sized sub-frames. Each sub-frame may include two consecutive time slots. A resource grid may be used to represent two time slots, each time slot including a resource block. The resource grid is divided into multiple resource elements. In LTE, a resource block contains 12 consecutive subcarriers in the frequency domain and, for a normal cyclic prefix in each OFDM symbol, 7 consecutive OFDM symbols in the time domain, or 84 resource elements. For an extended cyclic prefix, a resource block contains 6 consecutive OFDM symbols in the time domain and has 72 resource elements. Some of the resource elements, as indicated as R 302, 304, include DL reference signals (DL-RS). The DL-RS include Cell-specific RS (CRS) (also sometimes called common RS) 302 and UE-specific RS (UE-RS) 304. UE-RS 304 is transmitted only on the resource blocks upon which the corresponding physical DL shared channel (PDSCH) is mapped. The number of bits carried by each resource element depends on the modulation scheme. Thus, the more resource blocks that a UE receives and the higher the modulation scheme, the higher the data rate for the UE.

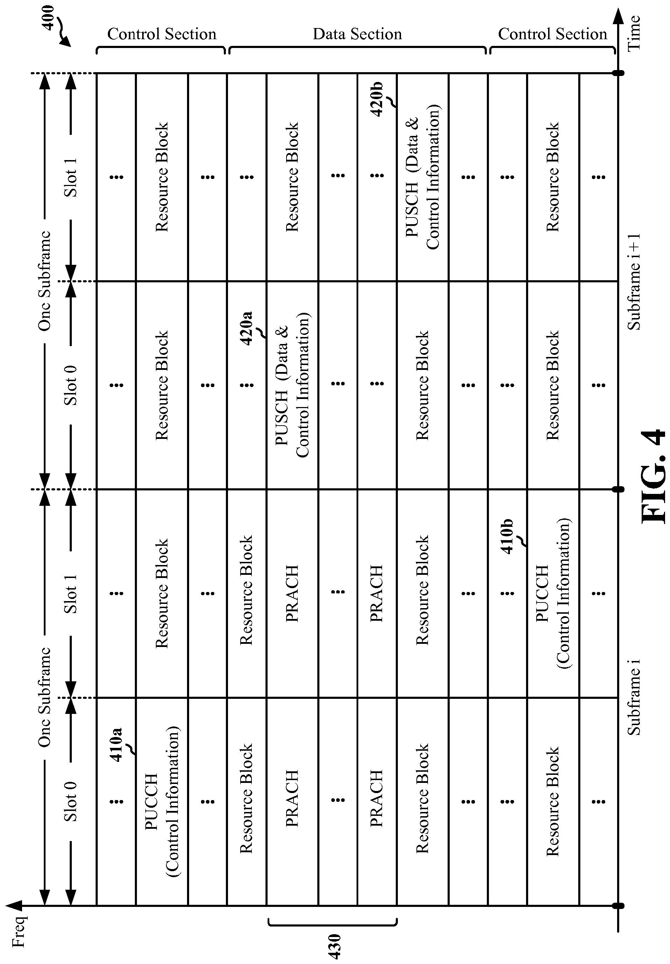

FIG. 4 is a diagram 400 illustrating an example of an UL frame structure in LTE. The available resource blocks for the UL may be partitioned into a data section and a control section. The control section may be formed at the two edges of the system bandwidth and may have a configurable size. The resource blocks in the control section may be assigned to UEs for transmission of control information. The data section may include all resource blocks not included in the control section. The UL frame structure results in the data section including contiguous subcarriers, which may allow a single UE to be assigned all of the contiguous subcarriers in the data section.

A UE may be assigned resource blocks 410a, 410b in the control section to transmit control information to an eNB. The UE may also be assigned resource blocks 420a, 420b in the data section to transmit data to the eNB. The UE may transmit control information in a physical UL control channel (PUCCH) on the assigned resource blocks in the control section. The UE may transmit only data or both data and control information in a physical UL shared channel (PUSCH) on the assigned resource blocks in the data section. A UL transmission may span both slots of a subframe and may hop across frequency.

A set of resource blocks may be used to perform initial system access and achieve UL synchronization in a physical random access channel (PRACH) 430. The PRACH 430 carries a random sequence and cannot carry any UL data/signaling. Each random access preamble occupies a bandwidth corresponding to six consecutive resource blocks. The starting frequency is specified by the network. That is, the transmission of the random access preamble is restricted to certain time and frequency resources. There is no frequency hopping for the PRACH. The PRACH attempt is carried in a single subframe (1 ms) or in a sequence of few contiguous subframes and a UE can make only a single PRACH attempt per frame (10 ms).

In cellular networks, when a mobile device moves from cell to cell and performs cell selection/reselection and handover, it has to measure the signal strength/quality of the neighboring cells. In this type of handover, the UE will assist in the handover decision by measuring the neighboring cells and reporting the measurements to the network, which in turn decides upon the timing and the target cell. The parameters to measure and the thresholds for reporting are decided by the network. Cell measurements, also known as cell search, are a complex and computationally expensive. It is also power and time consuming because it comprises computing the correlation between the received signal and known replica of the transmitted signal. Measurements to be performed by the UE for mobility are classified as: intra-frequency measurements, inter-layer (in case of hierarchical cell structure deployment), inter-frequency measurements, or inter-RAT measurements. Measurements quantities and reporting events are considered separately for each measurement type. Measurements commands are used by the E-UTRAN to order the UE to start, modify, or stop measurements. In RRC_IDLE state, the UE follows the measurements parameters defined for cell reselection and broadcasted by E-UTRAN. In RRC_CONNECTED state, the UE follows the measurements configuration such as MEASUREMENT_CONTROL specified by the radio resource controller (RRC) directed from eNB.

Measurements are classified as gap assisted or non-gap assisted depending on whether the UE needs transmission/reception gaps to perform the relevant measurements. A non-gap assisted measurement is a measurement on a cell that does not require transmission/reception gaps to allow the measurements to be performed. A gap assisted measurement is a measurement on a cell that does require transmission/reception gaps to allow the measurement to be performed. Gap patterns are configured and activated by RRC. According to the current 3GPP standards, the UE should not be assumed to be able to carry out inter-frequency neighbor (cell) measurements without measurement gaps. This applies for the following scenarios: (1) different carrier frequencies, bandwidth of the target cell smaller than the bandwidth of the current cell and the bandwidth of the target cell within the bandwidth of the current cell, (2) different carrier frequencies, bandwidth of the target cell larger than the bandwidth of the current cell and the bandwidth of the current cell within the bandwidth of the target cell, (3) different carrier frequencies and non-overlapping bandwidth. While measurements gaps are provided by the eNB for the UEs which need to perform gap assisted measurement for mobility support, measurements may also be performed by the UE during downlink/uplink idle periods that are provided by discontinuous reception (DRX), discontinuous transmission (DTX) or packet scheduling.

When the UE is camped on any cell state, the UE attempts to receive and measure signals including quality indicators from the inter-frequency or inter-RAT cell indicated in the measurement control message or broadcasted as system information of the serving cell. In order to receive and measure these signals and quality indicators the UE detects, synchronizes, and/or monitors the indicated inter-frequency and inter-RAT cells. UE measurement activity is also controlled by measurement rules that allow the UE to limit its measurement activities if certain conditions are fulfilled. According to 3GPP standards, the UE shall be able to identify new inter-frequency cells and perform signal strength measurements of identified inter-frequency cells if carrier frequency information is provided by the serving cell. This applies to both E-UTRA and UTRA technologies. In the case of E-UTRA, the UE is required to measure RSRP and RSRQ measurements of at least four inter-frequency identified cells per E-UTRA carrier. There is also a requirement on the UE to monitor up to at least 3 E-UTRA carriers. This means in total, an E-UTRA UE shall be capable of measuring at least 12 inter-frequency cells. Similarly, an UTRA UE is required to monitor 32 inter-frequency cells, including cells on maximum 2 additional carriers. RSRP and RSRQ are analogues to UMTS CPICH Ec/Io and CPICH RSCP measurements, respectively. The specifications also put constraints on how often these measurements should be performed.

An LTE compliant UE performing inter-RAT measurements (the UE is served by LTE cell and is required to perform measurements on UMTS cell) for example, for UTRAN and GERAN, or inter-frequency measurements (the UE is served by LTE cell and is required to perform measurements on LTE cell) for example, for E-UTRAN, is required to tune away. Similarly, a UMTS compliant UE performing inter-RAT measurements (the UE is served by UMTS cell and is required to perform measurements on LTE cell), or inter-frequency measurements (the UE is served by UMTS cell and is required to perform measurements on LTE cell) needs to do measurements to support the handover process. Performing the measurements requires assignment of measurement gaps and the UE going into compressed mode and tuning away. In either case, tuning away by the UE creates communication gaps that impact the quality of service and effective throughput.

In order to perform the measurements, the UE needs to receive and measure signals including quality indicators from the inter-frequency or inter-RAT cell indicated in the measurement control message or broadcasted as system information of the serving cell. Such reception and measurement involves detecting, synchronizing and/or monitoring the indicated inter-frequency and inter-RAT cells. This well defined multi-step process of detecting, synchronizing and monitoring the cells can be done in the time domain or the frequency domain. This type of processing can be performed in real time or offline. In the offline mode, the data is captured, stored and then processed in parallel.

As noted above, in a UMTS network, a UE measures received signal strength indicator (RSSI), common pilot channel (CPICH) received signal code power (RSCP), and CPICH Ec/No. In a LTE network, the UE periodically performs downlink radio channel measurements based on reference signals (RS) received from cells. The RS in LTE is similar to the pilot in WiMAX. The UE measures two parameters on the RS: reference signal received power (RSRP) and the reference signal received quality (RSRQ).

RSRP is a RSSI type of measurement. It measures the average received power over the resource elements that carry cell-specific reference signals within a certain frequency bandwidth. RSRQ is a C/I type of measurement and it indicates the quality of the received reference signal. RSRQ is defined as (N^{∗}RSRP)/(E-UTRA Carrier RSSI), where N makes sure the nominator and denominator are measured over the same frequency bandwidth. The carrier RSSI measures the average total received power observed only in OFDM symbols containing reference symbols for antenna port 0 (i.e., OFDM symbol 0 & 4 in a slot) in the measurement bandwidth over N resource blocks.

The total received power of the carrier RSSI includes the power from co-channel serving & non-serving cells, adjacent channel interference, thermal noise, etc. RSRP is applicable in both RRC_idle and RRC_connected modes, while RSRQ is only applicable in RRC_connected mode. RSRP is used in the procedure of cell selection and cell reselection in idle mode. RSRP and/or RSRQ are used in the procedure of handover. It is implementation specific.

A UE makes periodic measurements of RSRP and RSRQ based on the RS received from the serving cell and from adjacent cells. For RSRP determination the cell-specific reference signals Ro is used. If the UE can reliably detect that R1 is available it may use R1 in addition to Ro to determine RSRP.

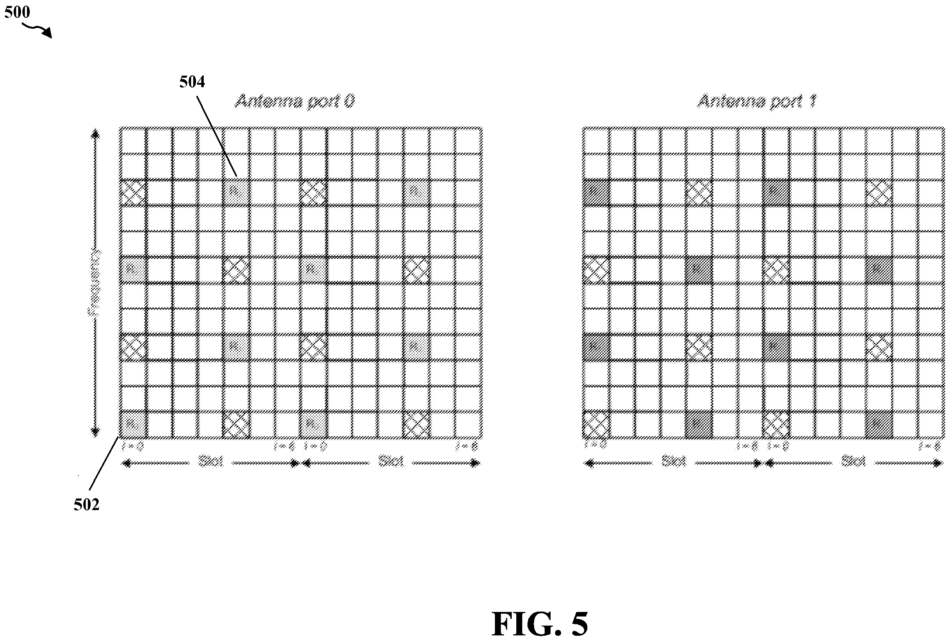

FIG. 5 is an illustration of the downlink RS structure 500 for channel estimation, CQI measurement, and cell search/acquisition. Reference symbols (R) are located in the 1st OFDM symbol (1st R) 502 and 3rd to last OFDM symbol (2nd R) 504 of every subframe.

An LTE compliant UE may be required to handover to another LTE network in a different frequency/band (an inter-frequency handover) or to a non-LTE network, such as a UMTS network (an inter-RAT handover). An LTE complaint UE needs to do measurements over LTE in different frequency/band and non-LTE networks to support the handover process. As stated above, in order to perform handover measurements, the LTE compliant UE may require the assignment of measurement gaps. Measurements gaps are assigned time intervals when the UE is free to perform measurement procedures on different radio access technology (RAT) transmission or different frequency/band. During measurement gaps, no data is transmitted between the serving base station (eNB) and the UE. It is desirable for an LTE compliant UE to measure cells in the same frequency without the use of measurement gaps.

Similarly, a UMTS compliant UE may be required to handover to another UMTS network in different frequency/band (an inter-frequency handover) or to a non-UMTS network, such as a LTE network (an inter-RAT handover). A UMTS compliant UE can measure cells in the same frequency without the use of measurement gaps in compressed mode.

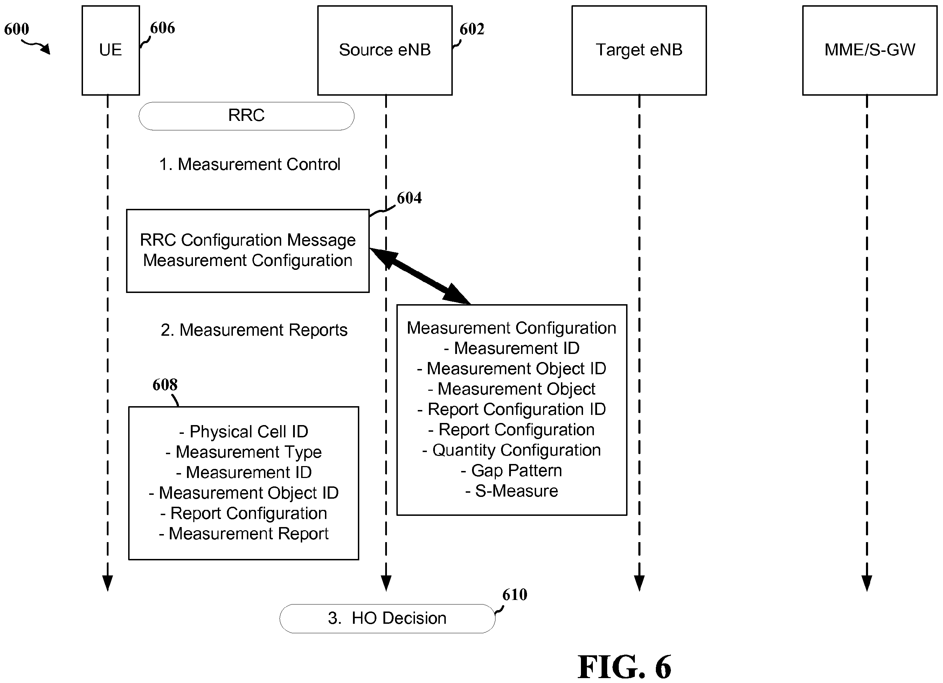

FIG. 6 is a diagram 600 illustrating messages used during the measurement phase of a conventional handover process. In the process, a source eNB 602 sends a configuration message 604 to a UE 606. The configuration message 604 tells the UE how to report the specific measurements. Included in the configuration message 604 is a gap pattern parameter, which defines the measurement reporting gap (time) intervals, assuming DRX mode of operation. During these measurement gap intervals, the UE 606 temporarily ceases communicating with the source eNB 602 in order to perform the measurements requested in the configuration message 604. After obtaining the requested measurements, the UE 606 sends a measurement report message 608 to the source eNB 602. The source eNB 602 uses the information in the measurement report message 608 to make a hand over (HO) decision 610.

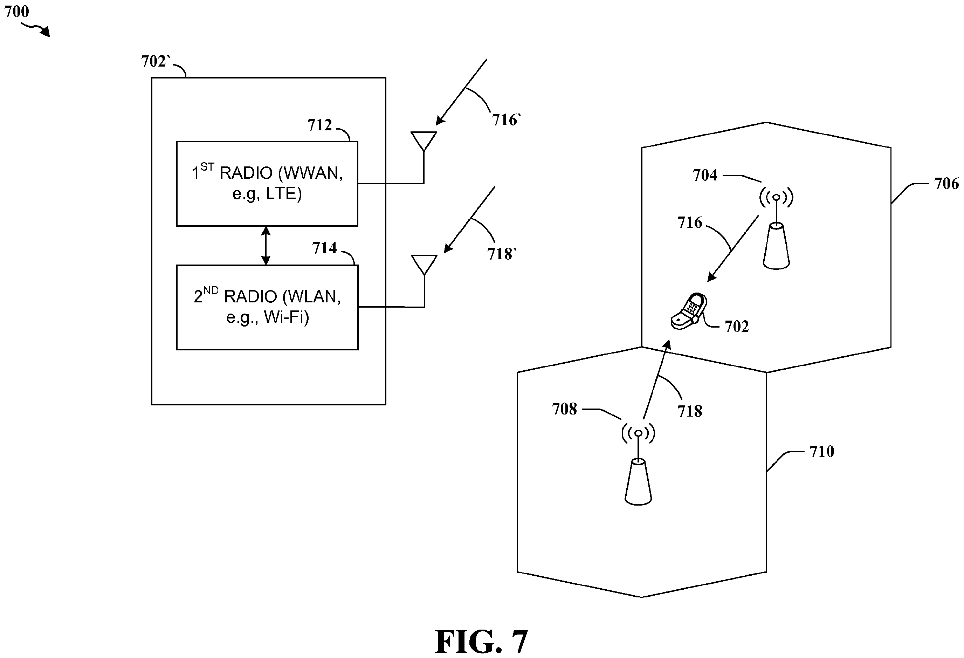

FIG. 7 is a diagram 700 illustrating an implementation of the measurement phase of a handover process that avoids gaps in communication between a UE and its serving cell. In this implementation, a second radio of the UE is used to carry out the measurements, thereby obviating the use of gap patterns as shown in FIG. 6. A first radio of the UE temporarily configures a second radio of the UE to do these measurements. This is feasible since mobile devices have multiple radios designed to work on different networks. For example the E-UTRAN and WCDMA radios are designed to work on wireless wide area networks (WWAN) while 802.11 radios are designed to work on wireless local area networks (WLAN). These WLAN radios implement an FFT engine as part of their normal operation. The FFT engine can be used to perform measurements on the downlink of WWAN networks, and hence eliminates the need for configuring the wireless device with measurement gaps.

A UE 702 is shown communicating with a first eNB 704 within a serving cell 706 adjacent a second eNB 708 within a neighboring cell 710. The UE 702, 702' includes a first radio 712 that is based on a first radio technology, e.g., a radio technology that implements a wireless wide area network (WWAN), such as LTE or UMTS. The UE 702, 702' also includes a second radio 714 that is based on a second radio technology that is different from the first radio technology, e.g., a radio technology that implements a wireless local area network (WLAN), such as Wi-Fi. The second radio 714, however, is configured or configurable to receive signals transmitted based on a radio technology different from the second radio technology, from a neighboring cell operating on a different frequency.

For example, the FFT engines of a second radio can be configured to perform measurements on the downlinks of a WWAN network. It is thus feasible to reconfigure a WLAN modem, such as a Wi-Fi modem (which is an OFDM based radio), to receive signals transmitted based on LTE technology. As such, the second radio 714 may perform the above mentioned E-UTRAN and handover measurements, while the first radio 712 remains on its current carrier frequency and continues to communicate in the serving cell. In this simultaneous, dual radio mode of operation, undesirable communication gaps are avoided as communication of the first radio with the serving cell is uninterrupted.

In this implementation, the first radio 712 of the UE 702 receives a command 716, 716' from the eNB 704 of the serving cell 706. The first radio 712 configures the second radio 714 to receive signals 718, 718' transmitted by the second eNB 708 in the neighboring cell 710 and extract a quality indicator from the received signal 718, 718'. This mode of operation requires tight cooperation between the first radio 712 and the second radio 714. To this end, the first radio 712 and second radio 714 are configured to communicate with each other to allow for parallel, i.e., simultaneous, operation of the radios and configuration of the second radio as needed.

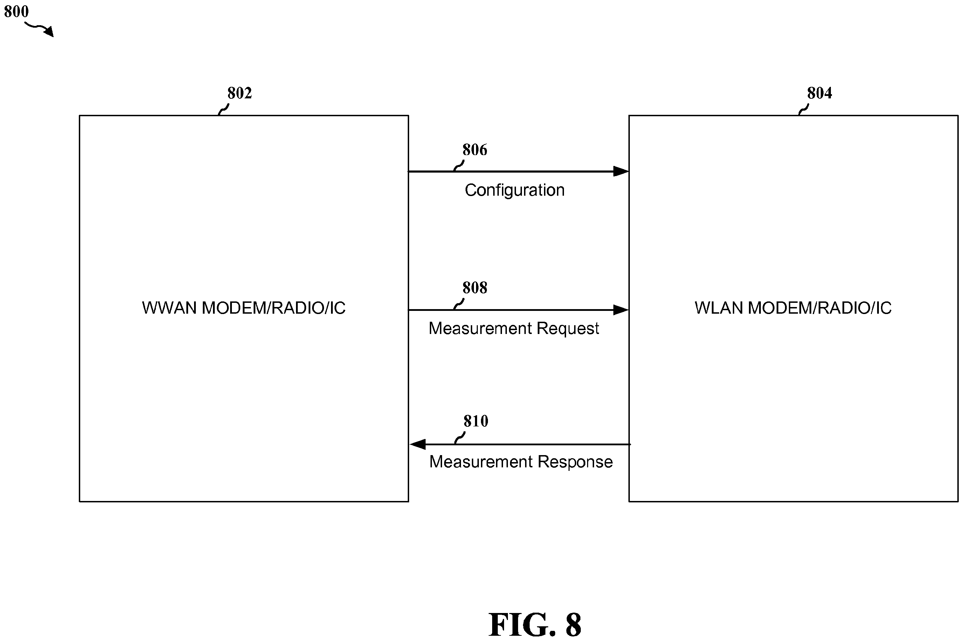

FIG. 8 is a diagram 800 illustrating communication between a first radio 802 and a second radio 804 of a UE. When the first radio 802 communicating with the serving cell receives a command from the E-UTRAN of the serving cell ordering the UE to perform quality measurements of a neighboring cell, the first radio 802 outputs a configuration command 806 to the second radio 804, which initiates reconfiguration of the second radio to a radio technology different from its primary radio technology. The configuration command provides the second radio with information that allows the second radio 804 to receive and measure signals including quality indicators from the neighboring cell. The command includes, but is not limited to: number of FFT points, spacing between subcarriers, sampling frequency, center frequency and bandwidth.

The first radio 802 also outputs a measurement request command 808 to the second radio 804. The request command 808 tells the second radio 804 which measurements to obtain. The second radio 804 receives and measures signals including quality indicators from the inter-frequency or inter-RAT cell indicated in the measurement request message. Such reception and measurement involves detecting, synchronizing and/or monitoring the indicated inter-frequency and inter-RAT cells. Detection, synchronization and monitoring may be done in either the frequency domain or time domain. The processing can also be performed in real time or offline. In the offline mode, the data is captured, stored and then processed.

When measurements are obtained by the second radio 804, the second radio outputs a measurement response 810 to the first radio 802. The response message includes, but is not limited to, Physical Cell ID, Measurement Type, Measurement ID, Measurement Object ID, Report configuration ID and Measurement report.

Subsequently, the first radio 802 communicating with the serving cell may receive a command from the E-UTRAN of the serving cell ordering the UE to stop quality measurements of a neighboring cell. In this case, the first radio 802 initiates reconfiguration of the second radio 804 back to its primary radio technology by sending another configuration command 806.

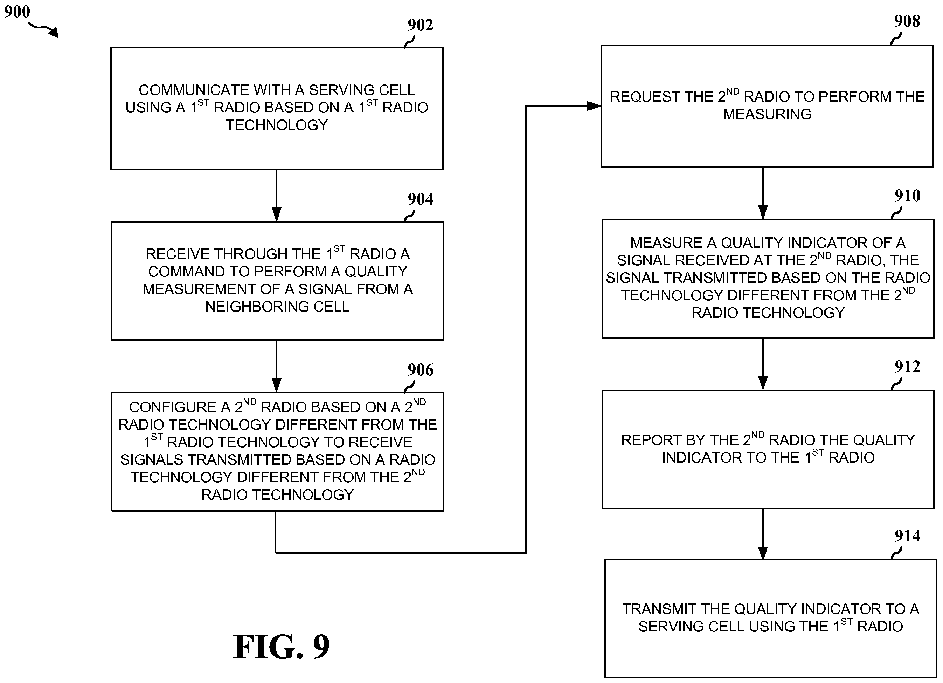

FIG. 9 is a flowchart 900 of a method of wireless communication. The method may be performed by a UE having a first radio based on a first radio technology and a second radio based on a second radio technology that is different from the first radio technology, such as described above with respect to FIG. 7. At step 902, the first radio of the UE communicates, for example, by receiving signals transmitted based on the first radio technology from a serving cell. The first radio technology may be WWAN technology such as LTE or UMTS.

At step 904, the first radio of the UE receives a command from the serving cell to perform a measurement of a neighboring cell in order to obtain a quality indicator for the neighboring cell. In the case of a LTE based neighboring cell, the quality indicator may include, for example, one or more of a RSRP, a RSRQ, and a single to interference plus noise ratio (SINR). In the case of an UMTS based neighboring cell, the quality indicator may include, for example, one or more of a RSSI, CPICH-RSCP and CPICH Ec/No.

At step 906, the first radio of the UE configures a second radio that is based on a second radio technology to receive signals transmitted based on a radio technology different from the second radio technology. The second radio technology may be a WLAN technology, such as WiFi. The radio technology different from the second radio technology may be the same radio technology associated with the first radio or it may be a third radio technology that is different from both the first and second radio technologies. For example, in the case where the first radio technology is LTE and the second radio technology is WiFi, the second radio may be reconfigured to receive signals transmitted in accordance with LTE based radio technology for inter-frequency measurement purposes, or reconfigured to receive signals transmitted in accordance with UMTS for inter-RAT measurement purposes. In the case where the first radio technology is UMTS and the second radio technology is WiFi, the second radio may be reconfigured to receive signals transmitted in accordance with LTE based radio technology for inter-RAT measurement purposes, or reconfigured to receive signals transmitted in accordance with UMTS for inter-frequency measurement purposes. As described above, reconfiguration of the second radio is done through a configuration command sent by the first radio to the second radio.

At step 908, the first radio of the UE requests the second radio to perform the measuring. It is noted that while reconfiguration of the second radio is described herein prior to the request for the second radio to perform the measurement, these steps may be performed in either order or at the same time. In other words, the request to measure and configuration of the second radio may be considered as occurring in either order or essentially simultaneously.

At step 910, the second radio of the UE measures a quality indicator of a signal received from a neighboring cell at the second radio. This signal, e.g., reference signal (RS), is transmitted based on the radio technology different from the second radio technology. The measuring involves detecting and synchronizing signals received by second radio from the neighboring cell and extrapolating therefrom, the appropriate quality indicators, such as RSRP, RSRQ, or SINR (for LTE) or RSSI, CPICH-RSCP or CPICH Ec/No (for UMTS). Detection and synchronization may be done in either the frequency domain or time domain. The processing can also be performed in real time or offline. In the offline mode, the data is captured, stored and then processed.

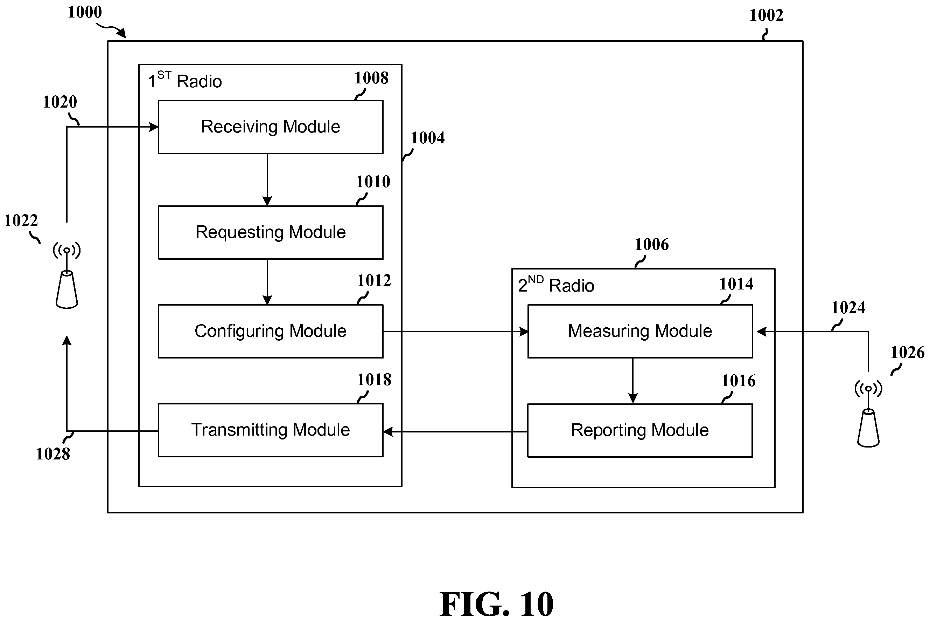

At step 912, the second radio of the UE reports the quality indicator to the first radio by sending a response message to the first radio. As describe above with reference to FIG. 10, the response message may include, but is not limited to, Physical Cell ID, Measurement Type, Measurement ID, Measurement Object ID, Report configuration ID and Measurement report.

Finally, at step 914 the first radio of the UE transmits the quality indicator to an eNB in the serving cell using the first radio based on the first radio technology (UMTS or LTE). The eNB uses the quality indicator to determine whether a handover should occur.

FIG. 10 is a conceptual data flow diagram 1000 illustrating the data flow between different modules/means/components in an exemplary apparatus 1002. The apparatus may be a UE. The apparatus 1002 includes a first radio module 1004 that is based on a first radio technology and a second radio module 1006 that is based on a second radio technology that is different from the first radio technology. The first radio module 1004 includes a receiving module 1008 that receives a command to perform the measuring operation described above with reference to FIG. 9. The command is received through a signal 1020 transmitted from equipment 1022, e.g., eNB, within the serving cell of the apparatus 1002 and is received using the first radio based on the first radio technology.

The first radio module 1004 also includes a requesting module 1010 and a configuring module 1012. The requesting module 1010 requests the second radio 1006 to perform the measurement, while the configuring module 1008 configures the second radio module 1006 to receive signals transmitted based on a radio technology different from the second radio technology.

The second radio module 1006 includes a measuring module 1014 that measures a quality indicator of a signal 1024 received at the second radio module. The signal 1024 is transmitted from equipment 1026 within a neighboring cell and is based on the radio technology different from the second radio technology. The second radio module 1006 also includes a reporting module 1016 that reports the quality indicator to the first radio 1004. The first radio module 1004 further includes a transmitting module 1018 that transmits the quality indicator to the equipment 1022 in the serving cell. The quality indicator is transmitted by a signal 1028 using the first radio based on the first radio technology. One or more of the modules 1008, 1010, 1012, 1018 of the first radio module 1004 function as a communication module that allow for communication using the first radio based on the first radio technology.

The apparatus 1002 may include additional modules that perform each of the steps of the algorithm in the aforementioned flow charts of FIG. 9. As such, each step in the aforementioned flow charts of FIG. 9 may be performed by a module and the apparatus may include one or more of those modules. The modules may be one or more hardware components specifically configured to carry out the stated processes/algorithm, implemented by a processor configured to perform the stated processes/algorithm, stored within a computer-readable medium for implementation by a processor, or some combination thereof.

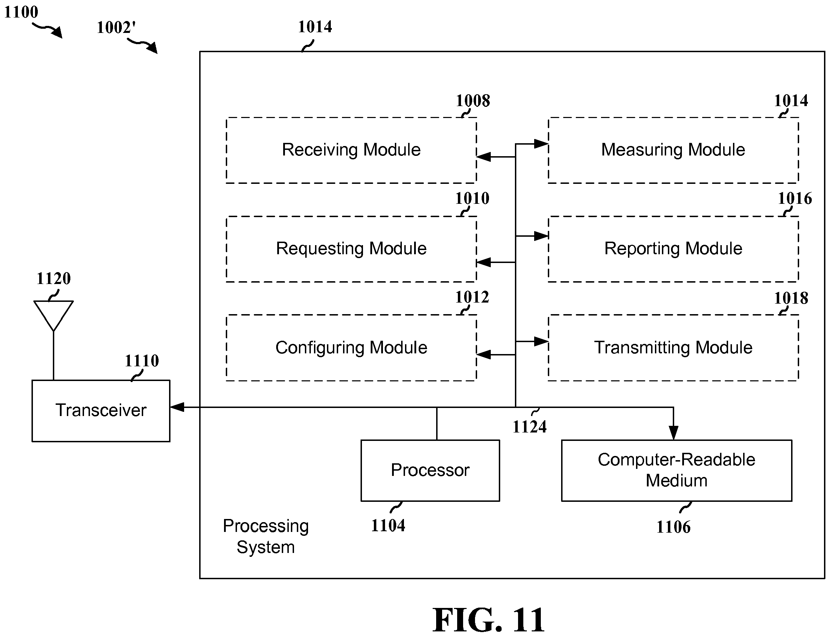

FIG. 11 is a diagram 1100 illustrating an example of a hardware implementation for an apparatus 1002' employing a processing system 1114. The processing system 1114 may be implemented with a bus architecture, represented generally by the bus 1124. The bus 1124 may include any number of interconnecting buses and bridges depending on the specific application of the processing system 1114 and the overall design constraints. The bus 1124 links together various circuits including one or more processors and/or hardware modules, represented by the processor 1104, the modules 1004, 1006, 1008, 1010, 1012, 1014, 1016, 1018 and the computer-readable medium 1106. The bus 1124 may also link various other circuits such as timing sources, peripherals, voltage regulators, and power management circuits, which are well known in the art, and therefore, will not be described any further.

The processing system 1114 may be coupled to a transceiver 1110. The transceiver 1110 is coupled to one or more antennas 1120. The transceiver 1110 provides a means for communicating with various other apparatus over a transmission medium. The processing system 1114 includes a processor 1104 coupled to a computer-readable medium 1106. The processor 1104 is responsible for general processing, including the execution of software stored on the computer-readable medium 1106. The software, when executed by the processor 1104, causes the processing system 1114 to perform the various functions described *supra* for any particular apparatus. The computer-readable medium 1106 may also be used for storing data that is manipulated by the processor 1104 when executing software. The processing system further includes at least one of the modules 1004, 1006, 1008, 1010, 1012, 1014, 1016, 1018. The modules may be software modules running in the processor 1104, resident/stored in the computer readable medium 1106, one or more hardware modules coupled to the processor 1104, or some combination thereof. The processing system 1114 may be a component of the UE 650 and may include the memory 660 and/or at least one of the TX processor 668, the RX processor 656, and the controller/processor 659.

In one configuration, the apparatus 1002/1002' for wireless communication includes means for communicating using a first radio based on a first radio technology, means for configuring a second radio based on a second radio technology different from the first radio technology to receive signals transmitted based on a radio technology different from the second radio technology, and means for measuring a quality indicator of a signal received at the second radio, the signal transmitted based on the radio technology different from the second radio technology. The apparatus 1002/1002' for wireless communication further includes means for receiving a command to perform the measuring, means for requesting the second radio to perform the measuring, means for reporting by the second radio the quality indicator to the first radio, and means for transmitting the quality indicator to a serving cell using the first radio.

The aforementioned means may be one or more of the aforementioned modules of the apparatus 1002 and/or the processing system 1114 of the apparatus 1002' configured to perform the functions recited by the aforementioned means. As described *supra*, the processing system 1114 may include the TX Processor 668, the RX Processor 656, and the controller/processor 659. As such, in one configuration, the aforementioned means may be the TX Processor 668, the RX Processor 656, and the controller/processor 659 configured to perform the functions recited by the aforementioned means.

It is understood that the specific order or hierarchy of steps in the processes disclosed is an illustration of exemplary approaches. Based upon design preferences, it is understood that the specific order or hierarchy of steps in the processes may be rearranged. Further, some steps may be combined or omitted. The accompanying method claims present elements of the various steps in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Unless specifically stated otherwise, the term "some" refers to one or more. Moreover, nothing disclosed herein is intended to be dedicated to the public regardless of whether such disclosure is explicitly recited in the claims. No claim element is to be construed as a means plus function unless the element is expressly recited using the phrase "means for."

## Claims

1. A method (900) of wireless communication on a user equipment having a first radio and a second radio, the method being executed by the user equipment and comprising:
communicating (902) using the first radio based on a first radio technology;
receiving (904) a command from a serving cell to perform measuring (910) a quality indicator of a signal received at the second radio, the command received using the first radio; and
configuring (906) the second radio based on a second radio technology different from the first radio technology to receive signals transmitted based on a radio technology different from the second radio technology; and
requesting (908) the second radio to perform the measuring (910);
measuring (910) said quality indicator, by the second radio, of said signal received at the second radio, said signal transmitted based on the radio technology different from the second radio technology.

2. The method (900) of claim 1, further comprising receiving a signal transmitted based on the first radio technology from a serving cell at the first radio while the second radio receives signals transmitted based on the radio technology different from the second radio technology from a neighboring cell or from the serving cell.

3. The method (900) of claim 1, wherein the first radio technology is LTE and the radio technology different from the second radio technology is LTE, in the case of inter-frequency measurements, and UMTS, in the case of inter-RAT measurements.

4. The method (900) of claim 1, wherein the first radio technology is UMTS and the radio technology different from the second radio technology is UMTS, in the case of inter-frequency measurements, and LTE, in the case of inter-RAT measurements.

5. The method (900) of claim 1, wherein the second radio technology is Wi-Fi.

6. The method (900) of claim 1, further comprising:
reporting (912) by the second radio the quality indicator to the first radio; and
transmitting (914) the quality indicator to a serving cell using the first radio.

7. The method (900) of claim 1, wherein the quality indicator comprises at least one of a reference signal received power (RSRP), a reference signal received quality (RSRQ), a received signal strength indicator (RSSI), a signal to interference plus noise ratio (SINR), common pilot channel (CPICH) received signal code power (RSCP), and CPICH Ec/No.

8. An apparatus (1000) for wireless communication on a user equipment having a first radio and a second radio, comprising:
means (1004) for communicating using the first radio based on a first radio technology, wherein the means (1004) for communicating comprises means (1008) for receiving a command from a serving cell to perform measuring a quality indicator of a signal received at the second radio, the command received using the first radio;
means (1012) for configuring the second radio based on a second radio technology different from the first radio technology to receive signals transmitted based on a radio technology different from the second radio technology; and
means (1010) for requesting the second radio to perform the measuring;
means (1014) for performing said measuring of said quality indicator of said signal received at the second radio, said signal transmitted based on the radio technology different from the second radio technology.

9. The apparatus (1000) of claim 8, configured to receive a signal transmitted based on the first radio technology from a serving cell at the first radio while the second radio receives signals transmitted based on the radio technology different from the second radio technology from a neighboring cell or from the serving cell.

10. The apparatus (1000) of claim 8, wherein the first radio technology is LTE and the radio technology different from the second radio technology is LTE, in the case of inter-frequency measurements, and UMTS, in the case of inter-RAT measurements.

11. The apparatus (1000) of claim 8, wherein the first radio technology is UMTS and the radio technology different from the second radio technology is UMTS, in the case of inter-frequency measurements, and LTE, in the case of inter-RAT measurements.

12. The apparatus (1000) of claim 8, wherein the second radio technology is Wi-Fi.

13. The apparatus (1000) of claim 8, further comprising:
means (1016) for reporting by the second radio the quality indicator to the first radio; and
means (1018) for transmitting the quality indicator to a serving cell using the first radio.

14. A computer program product, comprising
a computer-readable medium comprising code which when executed on a processor of a user equipment causes the processor to carry out the method of any one of claims 1 to 7.

## Patentansprüche

1. Ein Verfahren (900) für Drahtloskommunikation auf einer Nutzereinrichtung, die eine erste Funkeinrichtung und eine zweite Funkeinrichtung hat, wobei das Verfahren durch die Nutzereinrichtung ausgeführt wird und Folgendes aufweist:
Kommunizieren (902) unter Verwendung der ersten Funkeinrichtung basierend auf einer ersten Funktechnologie;
Empfangen (904) eines Befehls von einer versorgenden Zelle zum Durchführen von Messen (910) eines Qualitätsindikators eines Signals, das an der zweiten Funkeinrichtung empfangen wird, wobei der Befehl unter Verwendung der ersten Funkeinrichtung empfangen wird; und
Konfigurieren (906) der zweiten Funkeinrichtung basierend auf einer zweiten Funktechnologie, die sich von der ersten Funktechnologie unterscheidet zum Empfangen von Signalen, die basierend auf einer Funktechnologie gesendet werden, die sich von der zweiten Funktechnologie unterscheidet; und
Anfragen (908), dass die zweite Funkeinrichtung das Messen (910) durchführt;
Messen (910) des Qualitätsindikators, durch die zweite Funkeinrichtung, des Signals, das an der zweiten Funkeinrichtung empfangen wird, wobei das Signal basierend auf der Funktechnologie gesendet wird, die sich von der zweiten Funktechnologie unterscheidet.

2. Verfahren (900) nach Anspruch 1, das weiter Empfangen eines Signals aufweist, das basierend auf der ersten Funktechnologie gesendet wird, von einer versorgenden Zelle an der ersten Funkeinrichtung, während die zweite Funkeinrichtung Signale empfängt, die basierend auf der Funktechnologie gesendet werden, die sich von der zweiten Funktechnologie unterscheidet, von einer benachbarten Zelle oder von der versorgenden Zelle.

3. Verfahren (900) nach Anspruch 1, wobei die erste Funktechnologie LTE ist und die Funktechnologie, die sich von der zweiten Funktechnologie unterscheidet, in dem Fall von Zwischen-Frequenz-Messungen LTE ist und in dem Fall von Zwischen-RAT-Messungen UMTS ist.

4. Verfahren (900) nach Anspruch 1, wobei die erste Funktechnologie UMTS ist und die Funktechnologie, die sich von der zweiten Funktechnologie unterscheidet, in dem Fall von Zwischen-Frequenz-Messungen UMTS ist und in dem Fall von Zwischen-RAT-Messungen LTE ist.

5. Verfahren (900) nach Anspruch 1, wobei die zweite Funktechnologie Wi-Fi ist.

6. Verfahren (900) nach Anspruch 1, das weiter Folgendes aufweist:
Berichten (912), durch die zweite Funkeinrichtung, des Qualitätsindikators an die erste Funkeinrichtung; und
Senden (914) des Qualitätsindikators an eine versorgende Zelle unter Verwendung der ersten Funkeinrichtung.

7. Verfahren (900) nach Anspruch 1, wobei der Qualitätsindikator wenigstens eines von einer empfangenen Leistung des Referenzsignals bzw. RSRP (RSRP = reference signal received power), einer empfangenen Qualität des Referenzsignals bzw. RSRQ (RSRQ = reference signal received quality), einem Indikator einer empfangenen Signalstärke bzw. RSSI (RSSI = received signal strength indicator), einem Signal-zu-Interferenz-plus-Rauschen-Verhältnis bzw. SINR (SINR = signal to interference plus noise ratio), einer empfangenen Signalcodeleistung des gemeinsamen Pilotkanals bzw. CPICH RSCP (CPICH RSCP = common pilot channel received signal code power) und CPICH Ec/No aufweist.

8. Eine Vorrichtung (1000) für Drahtloskommunikation auf einer Nutzereinrichtung mit einer ersten Funkeinrichtung und einer zweiten Funkeinrichtung, die Folgendes aufweist:
Mittel (1004) zum Kommunizieren unter Verwendung der ersten Funkeinrichtung basierend auf einer ersten Funktechnologie, wobei die Mittel (1004) zum Kommunizieren Mittel (1008) aufweisen zum Empfangen eines Befehls von einer versorgenden Zelle zum Durchführen einer Messung eines Qualitätsindikators eines Signals, das an der zweiten Funkeinrichtung empfangen wird,
wobei der Befehl unter Verwendung der ersten Funkeinrichtung empfangen wird;
Mittel (1012) zum Konfigurieren der zweiten Funkeinrichtung basierend auf einer zweiten Funktechnologie, die sich von der ersten Funktechnologie unterscheidet, zum Empfangen von Signalen, die basierend auf einer Funktechnologie gesendet werden, die sich von der zweiten Funktechnologie unterscheidet; und
Mittel (1010) zum Anfordern, dass die zweite Funkeinrichtung das Messen durchführt;
Mittel (1014) zum Durchführen des Messens des zweiten Qualitätsindikators des Signals, das an der zweiten Funkeinrichtung empfangen wird, wobei sich das Signal, das basierend auf der Funktechnologie gesendet wird, von der zweiten Funktechnologie unterscheidet.

9. Vorrichtung (1000) nach Anspruch 8, die konfiguriert ist zum Empfangen eines Signals, das basierend auf der ersten Funktechnologie von einer versorgenden Zelle gesendet wird, an der ersten Funkeinrichtung, während die zweite Funkeinrichtung Signale empfängt, die basierend auf der Funktechnologie gesendet werden, die sich von der zweiten Funktechnologie unterscheidet, von einer benachbarten Zelle oder von der versorgenden Zelle.

10. Vorrichtung (1000) nach Anspruch 8, wobei die erste Funktechnologie LTE ist und die Funktechnologie, die sich von der zweiten Funktechnologie unterscheidet. in dem Fall von Zwischen-Frequenz-Messungen LTE ist und in dem Fall von Zwischen-RAT-Messungen UMTS ist.

11. Vorrichtung (1000) nach Anspruch 8, wobei die erste Funktechnologie UMTS ist und die Funktechnologie, die sich von der zweiten Funktechnologie unterscheidet, in dem Fall von Zwischen-Frequenz-Messungen UMTS ist und in dem Fall von Zwischen-RAT-Messungen LTE ist.

12. Vorrichtung (1000) nach Anspruch 8, wobei die zweite Funktechnologie Wi-Fi ist.

13. Vorrichtung (1000) nach Anspruch 8, die weiter Folgendes aufweist:
Mittel (1016) zum Berichten, durch die zweite Funkeinrichtung, des Qualitätsindikators an die erste Funkeinrichtung; und
Mittel (1018) zum Senden des Qualitätsindikators an eine versorgende Zelle unter Verwendung der ersten Funkeinrichtung.

14. Ein Computerprogrammprodukt, das Folgendes aufweist:
ein computerlesbares Medium, das Code aufweist, der, wenn er auf einem Prozessor einer Nutzereinrichtung ausgeführt wird, den Prozessor veranlasst zum Durchführen des Verfahrens nach einem der Ansprüche 1 bis 7.

## Revendications

1. Procédé (900) de communication sans fil sur un équipement utilisateur ayant une première radio et une deuxième radio, le procédé étant exécuté par l'équipement utilisateur et comprenant les étapes suivantes :
la communication (902) en utilisant la première radio sur la base d'une première technologie radio ;
la réception (904) d'une commande en provenance d'une cellule serveur pour mettre en œuvre la mesure (910) d'un indicateur de qualité d'un signal reçu au niveau de la deuxième radio, la commande reçue utilisant la première radio ; et
la configuration (906) de la deuxième radio sur la base d'une deuxième technologie radio différente de la première technologie radio pour recevoir des signaux émis sur la base d'une technologie radio différente de la deuxième technologie radio ; et
la requête (908) à la deuxième radio de mettre en œuvre la mesure (910) ;
la mesure (910) dudit indicateur de qualité, par la deuxième radio, dudit signal reçu au niveau de la deuxième radio, ledit signal étant émis sur la base de la technologie radio différente de la deuxième technologie radio.

2. Procédé (900) selon la revendication 1, comprenant en outre la réception d'un signal émis sur la base de la technologie radio provenant d'une cellule serveur au niveau de la première radio pendant que la deuxième radio reçoit des signaux émis sur la base de la technologie radio différente de la deuxième technologie radio provenant d'une cellule voisine ou de la cellule serveur.

3. Procédé (900) selon la revendication 1, dans lequel la première technologie radio est LTE et la technologie radio différente de la deuxième technologie radio est LTE, dans le cas de mesures inter-fréquences, et UMTS, dans le cas de mesures inter-RAT.

4. Procédé (900) selon la revendication 1, dans lequel la première technologie radio est UMTS et la technologie radio différente de la deuxième technologie radio est UMTS, dans le cas de mesures inter-fréquences, et LTE, dans le cas de mesures inter-RAT.

5. Procédé (900) selon la revendication 1, dans lequel la deuxième technologie radio est le Wi-Fi.

6. Procédé (900) selon la revendication 1, comprenant en outre les étapes suivantes :
le signalement (912) par la deuxième radio de l'indicateur de qualité à la première radio ; et
l'émission (914) de l'indicateur de qualité à destination d'une cellule serveur en utilisant la première radio.

7. Procédé (900) selon la revendication 1, dans lequel l'indicateur de qualité comprend au moins un élément parmi une puissance reçue de signal de référence (RSRP), une qualité reçue de signal de référence (RSRQ), un indicateur d'intensité de signal reçu (RSSI), un rapport signal sur interférence plus bruit (SINR), une puissance de code de signal (RSCP) reçu sur un canal pilote commun (CPICH), et le CPICH Ec/No.

8. Appareil (1000) de communication sans fil sur un équipement utilisateur ayant une première radio et une deuxième radio, comprenant :
des moyens (1004) pour communiquer en utilisant la première radio sur la base d'une première technologie radio, dans lequel les moyens (1004) pour communiquer comprennent des moyens (1008) pour recevoir une commande en provenance d'une cellule serveur pour mettre en œuvre la mesure d'un indicateur de qualité d'un signal reçu au niveau de la deuxième radio, la commande reçue utilisant la première radio ;
des moyens (1012) pour configurer la deuxième radio sur la base d'une deuxième technologie radio différente de la première technologie radio pour recevoir des signaux émis sur la base d'une technologie radio différente de la deuxième technologie radio ; et
des moyens (1010) pour demander à la deuxième radio de mettre en œuvre la mesure ;
des moyens (1014) pour mettre en œuvre ladite mesure dudit indicateur de qualité dudit signal reçu au niveau de la deuxième radio, ledit signal étant émis sur la base de la technologie radio différente de la deuxième technologie radio.

9. Appareil (1000) selon la revendication 8, configuré pour recevoir un signal émis sur la base de la première technologie radio provenant d'une cellule serveur au niveau de la première radio pendant que la deuxième radio reçoit des signaux émis sur la base de la technologie radio différente de la deuxième technologie radio provenant d'une cellule voisine ou de la cellule serveur.

10. Appareil (1000) selon la revendication 8, dans lequel la première technologie radio est LTE et la technologie radio différente de la deuxième technologie radio est LTE, dans le cas de mesures inter-fréquences, et UMTS, dans le cas de mesures inter-RAT.

11. Appareil (1000) selon la revendication 8, dans lequel la première technologie radio est UMTS et la technologie radio différente de la deuxième technologie radio est UMTS, dans le cas de mesures inter-fréquences, et LTE, dans le cas de mesures inter-RAT.

12. Appareil (1000) selon la revendication 8, dans lequel la deuxième technologie radio est le Wi-Fi.

13. Appareil (1000) selon la revendication 8, comprenant en outre :
des moyens (1016) pour signaler par la deuxième radio l'indicateur de qualité à la première radio ; et
des moyens (1018) pour émettre l'indicateur de qualité à destination d'une cellule serveur en utilisant la première radio.

14. Produit programme d'ordinateur, comprenant
un support lisible par ordinateur comprenant un code qui, quand il est exécuté sur un processeur d'un équipement utilisateur, force le processeur à mettre en œuvre le procédé selon l'une quelconque des revendications 1 à 7.
